# EUROPEAN PATENT SPECIFICATION

(11) **EP 2 859 543 B1**
(45) Date of publication and mention of the grant of the patent: **04.05.2022**
(21) Application number: 13804231.2
(22) Date of filing: 10.06.2013
(51) Int. Cl.: G08G 1/16, B60Q 1/00, B60Q 9/00

(54) **WARNING SYSTEM**
WARNSYSTEM
SYSTÈME D'AVERTISSEMENT

(30) Priority: 11.06.2012 SE 1250603
(43) Date of publication of application: 15.04.2015
(73) Proprietor: Scania CV AB, 151 87 Södertälje (SE); Volkswagen Aktiengesellschaft, 38440 Wolfsburg (DE)
(72) Inventor: RICKNÄS, Daniel, S-116 64 Stockholm (SE); KLEEN, Andro, DE-47057 Duisburg (DE)
(74) Representative: Bjerkéns Patentbyrå KB (Stockholm)
(86) International application number: PCT/SE2013/050656
(87) International publication number: WO 2013/187829

(56) References cited:
- WO-A1-2010/064963
- DE-A1-102008 003 936
- US-A1- 2007 182 527
- US-A1- 2007 182 527
- US-A1- 2009 063 053
- US-A1- 2009 063 053
- US-A1- 2010 020 170
- None

## Description

### Field of the invention

The present invention relates to a warning system according to the preamble of the independent claim. The invention relates in particular to a warning system adapted to making it easier for drivers to deal with overtaking.

### Background to the invention

Currently for cars and trucks there are existing systems adapted to monitoring traffic lanes on one or both sides of a vehicle to check whether there are any vehicles alongside the host vehicle, e.g. at blind angles. These systems indicate to the driver whether there is a vehicle in any adjacent traffic lane, by generating some form of visual warning close to the rearview mirror or at the A-pillar, i.e. the part of the vehicle body which is situated forward of the front doors, serves as roof support and has the windscreen fastened to its sides. The warning may also take the form of an acoustic warning which may be combined with the visual warning. If the driver begins moving into a lane in which there is already a vehicle, the warning will escalate.

The patent specifications referred to below are examples of systems adapted to indicating, and warning drivers of, objects in their vehicle's surroundings.

US-2010/0020170 refers to an image processing system for a vehicle which is adapted inter alia to identifying an object behind or alongside the host vehicle and then presenting in or close to the rearview mirror a clarified version of the object. This may for example be done by generating a pattern which is superimposed in the mirror to more clearly present the object to the driver.

EP-2073185 refers to a method and a device for generating and presenting warning signals if an object is detected outside a vehicle, e.g. the speed of the object may be detected. The warnings are for example presented close to the vehicle's A-pillars.

US-7,079,017 refers to a warning system for motor vehicles. The system comprises a sensor to detect an obstacle near to the vehicle, a device to generate a signal in response to the obstacle detected and an indicating device which generates an alarm for the driver. The warning system is particularly adapted to causing the driver to direct attention towards where the obstacle is situated. This is for example done by providing LEDs close to the rearview mirrors and having them flash if the driver's attention is to be drawn to obstacles which are visible in a specific rearview mirror.

US-2009/0063053 refers to a method and a system for identifying blind angles and providing warnings by visual indicators, e.g. via LEDs or screens. The visual indicators are for example determined on the basis of the relative speed of a vehicle approaching from behind relative to that of the host vehicle.

DE-102008003936 refers to a device adapted to presenting on a rearview mirror of a freight vehicle warning messages which give inter alia an indication of a relative speed between the host vehicle and an adjacent vehicle.

On the occasion of overtaking, particularly in the case of trucks which have a long acceleration distance, it is important to assess correctly the speed of vehicles approaching from behind in the traffic lane intended to be used for overtaking. The speed of vehicles approaching from behind is difficult to estimate from a quick glance in the rearview mirror.

In the case of trucks it is not sufficient to learn that there is a vehicle alongside the host vehicle, since the latter may be very long. It is therefore also important to know the location in the longitudinal direction of the vehicle in the adjacent traffic lane relative to the host vehicle. There are solutions which address this problem by fitting round the truck a plurality of mirrors, up to seven in number. This means that when wishing to verify that the vehicle can proceed safely the driver has to look at all of the mirrors, distracting attention from other systems on board, with consequent potential for jeopardising the handling of the vehicle.

There is thus a need to make it easier for the driver to monitor the surroundings of the host vehicle when changing traffic lanes, without contributing to a yet more complex driver environment.

The object of the present invention is to propose a warning system which avoids the disadvantages of today's systems.

### Summary of the invention

The above objects are achieved with the invention defined by the independent claim.

Preferred embodiments are defined by the dependent claims.

The solution according to the present invention comprises providing a warning system adapted to showing where a critical situation may arise, by drawing the driver's attention towards a specific visual field. This may for example be achieved by enlarging the image in the part of the rearview mirror where there is a risky situation, or by illuminating round the mirror, e.g. an upper or lower portion of it, depending on whether the vehicle is near (lower part of mirror) or further away and is approaching at high speed (upper part of mirror).

Situations arising may also relate to an object (vehicle) which is not visible in the mirrors, e.g. to the right ahead of the host vehicle. In such cases the driver's attention needs to be drawn accordingly, e.g. by generating visual warnings in the appropriate direction.

The indicating system according to the present invention affords a number of advantages. One is that it enlarges the portion of the image in the mirror where the critical vehicle is situated, making it possible for the driver to have a better view of the surroundings of his/her vehicle. This applies particularly when changing traffic lanes.

The indicating system is also adapted to incorporating information about what the driver sees in the image, e.g. warning of a vehicle which is travelling at high speed, whereas no warning is generated in the case of a vehicle which is far away and travelling at low speed.

### Brief description of drawings

Figure 1 is a block diagram illustrating a number of embodiments of the present invention.
Figure 2 is a schematic diagram of a road with two traffic lanes illustrating a first aspect of the present invention.
Figure 3 is a schematic diagram of a road with two traffic lanes illustrating a second aspect of the present invention.

### Detailed description of preferred embodiments of the invention

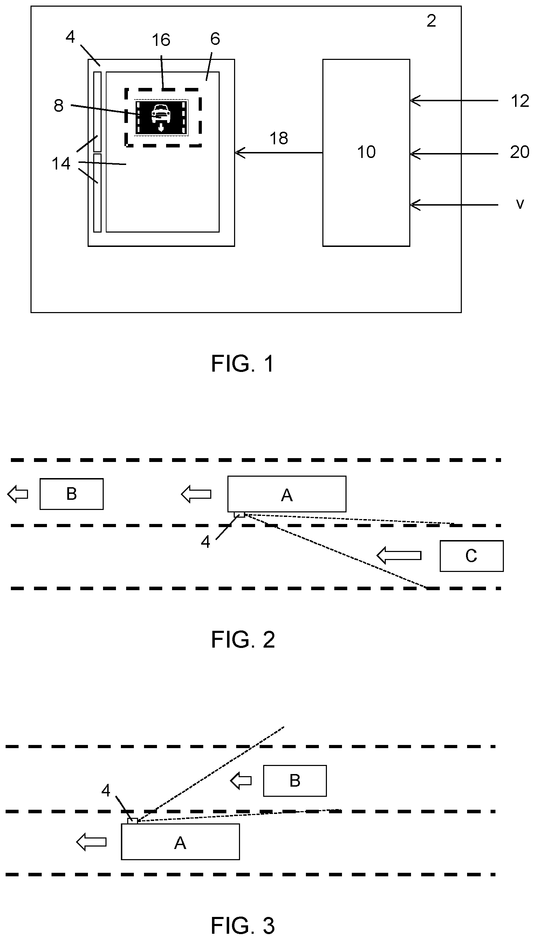

The invention will now be described in detail with reference to the block diagram in Figure 1. It thus relates to a warning system 2 for a vehicle, e.g. a truck, a bus or a car. The system comprises at least one viewing device 4 with a viewing surface 6 adapted to presenting objects 8 which are in the vehicle's vicinity. The viewing device takes in one embodiment the form of a rearview mirror fitted on the outside of the vehicle to provide the driver with a reflected image of the mirror's viewing surface. The invention is also applicable in the case of a rearview mirror fitted in the vehicle. The viewing surface is preferably a semitransparent reflective surface.

In another embodiment the viewing device takes the form of a VDU, e.g. of LCD type. The warning system further comprises a processing unit 10 adapted to receiving one or more sensor signals 12 from one or more sensors adapted to measuring at least the speed of an object, or its distance, e.g. a truck, car, bus or motor cycle, in the vehicle's vicinity. The sensors take for example the form of speed sensors, e.g. radar sensors, and in one embodiment they are one situated close to the viewing device. The processing unit is also adapted to receiving a signal which represents the speed v of the host vehicle.

The processing unit 10 is adapted to calculating Δv, which is the difference between the respective speeds of said object and the host vehicle, and to comparing it with at least one threshold value vₜ.

The warning system comprises at least one indicating means 14 situated close to said viewing device 4 and adapted to generating at least one warning indication 16 for presentation on or close to the viewing surface 6 of the viewing device.

The indicating means 14 is in one embodiment situated behind said viewing surface 6, which takes the form of a semitransparent reflective surface. The indicating means takes for example the form of LEDs, or some other light-generating means, which are therefore situated behind the viewing surface. The indicating means is so arranged that any desired part or parts of the viewing surface may be marked by activating the indicating means.

The warning indication 16 is generated to identify said object in response to a display signal 18 generated by said processing unit 10 if Δv exceeds vₜ.

The viewing indication is intended to be generated when a vehicle approaching quickly from behind is in a traffic lane which the host vehicle will need to use during an overtaking operation, in order to make the driver pay extra attention to the vehicle approaching from behind. If two or more fast vehicles are identified, two or more warning indications may be generated and displayed on the viewing screen.

The threshold value vₜ may for example be a predetermined proportion of the host vehicle's speed or a specified value. If the host vehicle is travelling at 90 km/h and it is determined that a vehicle approaching from behind is travelling 10% faster, the display signal will be generated when the vehicle behind is travelling faster than 99 km/h.

If Δv is instead determined at 10 km/h, the display signal will be generated when a vehicle approaching from behind is travelling faster than 100 km/h.

In a further alternative, Δv depends on the host vehicle's speed v in such a way that it decreases with increasing speed.

In one embodiment the warning system 2 is adapted to being in at least two states, viz. a basic state and a warning state. This is determined by the processing unit 10 on the basis of one or more vehicle-related parameters 20, a basic state being set if there is no intention to change traffic lanes, and a warning state if a lane change has begun. The vehicle-related parameters comprise for example the state of the vehicle's direction indicators and/or the vehicle's proximity to traffic lane markings. The vehicle's vicinity to lane markings is for example available via its lane departure warning system.

In a further embodiment, the processing unit 10 is adapted to further determining a state of the warning system on the basis of one or more vehicle-related parameters whereby a transition state is set if an intention to change lanes is detected, via which transition state the basic state changes to the warning state.

In one embodiment of the invention, the nature of the warning indication depends on the state of the warning system.

A number of different situations may then arise.

If a vehicle approaching from behind from behind is detected by Δv being greater than vₜ but the warning system is in the basic state, i.e. there being no intention to change lanes, which is detected by no flashers being active and/or by the vehicle being at normal distances from lane markings, no warning indication will be generated.

If conversely a vehicle approaching from behind from behind is detected by Δv being greater than vₜ and the warning system being in the warning state, i.e. a lane change having begun, which is detected by flashers being active and/or the vehicle being about to cross lane markings, a warning indication will be generated. It may take the form of a red rectangle round the vehicle approaching from behind. It may also be altered dynamically, e.g. by flashing more and more quickly the nearer the vehicle behind comes.

Before the warning state occurs, the warning system may preferably be in the transition state in which an intention to change lanes has been detected, e.g. by the vehicle being close to lane markings. In this state the warning indication is for example generated in the form of a yellow rectangle surrounding the vehicle approaching from behind.

In Figure 1 the warning indication 16 is depicted as a broken-line rectangle but may be of any desired geometrical shape appropriate to identifying said object, e.g. a circle, a square or a rectangle.

In one embodiment the processing unit 10 is adapted to superimposing said warning indication on the image of the object so that the warning indication surrounds said object. This is preferably done by analysing the image of the object in order to determine the object's location in the image. This location serves as a basis for identifying where the warning indication has to be positioned so that the object is surrounded and clearly indicated.

As mentioned above, the warning indication 16 is adapted to changing dynamically on the basis of said Δv and said vehicle-related parameters, as regards both colour, shape and presentation, e.g. flashing.

In a further embodiment said indicating means 14 is situated along the edge of the viewing surface 6 and adapted to indicating the location of a vehicle in an adjacent traffic lane. The indicating means then takes for example the form of LEDs, which may be grouped in two sections, viz. an upper section which lights up if a vehicle approaching from behind is moving at high speed and is at a substantial distance behind the host vehicle, and a lower section which lights up if a vehicle approaching fast from behind is close to the host vehicle. The indicating means in this embodiment may of course be combined with the warning indication described above which is displayed on the viewing surface and surrounds the vehicle approaching from behind.

In yet another embodiment the indicating means 14 is adapted to indicating when a vehicle in an adjacent traffic lane has been overtaken. This involves using the indicating means which are situated at the edge of the viewing device, preferably by the lower section lighting up when a vehicle has been overtaken and there is room for the host vehicle to move into the same lane as the overtaken vehicle and drive on ahead of it. This is advantageous where the host vehicle is long and it is difficult to assess when the overtaking has been completed. This case involves for example the use of radar sensors to assess the distance from the overtaken vehicle, and as the length of the host vehicle is known the lower section lights up when the distance from the vehicle overtaken is greater than the length of the host vehicle.

Figure 2 is a schematic diagram of a road with two traffic lanes illustrating a first aspect of the present invention. The host vehicle A is behind a vehicle B which is travelling more slowly than the host vehicle. In an adjacent lane a vehicle C is approaching from behind at a faster speed than vehicle A. Using the present invention, the driver of vehicle A will receive a warning indication if he/she intends to begin to overtake. Figure 2 depicts the viewing device 4 with sensors adapted to measuring the speed of vehicles in adjacent traffic lanes, as schematically illustrated by dotted lines.

Figure 3 is a schematic diagram of a road with two traffic lanes illustrating a second aspect of the present invention. Here the situation is that the host vehicle A has overtaken vehicle B and intends to move into the traffic lane in front of vehicle B. A warning indication lighting up in the lower section of the viewing device 4 gives the driver the go-ahead for the lane change. Figure 3 likewise depicts the viewing device, in which sensors are incorporated to determine the distance from a vehicle in an adjacent lane.

The present invention is not restricted to the preferred embodiments described above. Sundry alternatives, modifications and equivalents may be used. The above embodiments are therefore not to be regarded as limiting the invention's protective scope which is defined by the attached claims.

## Claims

1. A warning system (2) for a **host vehicle (A),** which system comprises at least one viewing device (4) with a viewing surface (6) adapted to **present vehicles** (8) which are in the vicinity of the **host** vehicle, a processing unit (10) adapted to **receive** one or more sensor signals (12) from one or more sensors which are adapted to **measure** at least the speed of **and distance to a vehicle (B)** in the vehicle's vicinity, to calculate Δv, which is the difference between the respective speeds of said **vehicle** and the host vehicle, and to **compare** Δv with at least one threshold value vₜ, wherein the warning system comprises at least one indicating means (14) situated close to said viewing device (4) and adapted to **generate** at least one warning indication (16) for presentation on or close to the viewing surface (6) of the viewing device, **characterised in that** the indicating means (14) **is** further adapted to **indicate** the location of said **vehicle** in corresponding parts of the viewing surface (6), **and in that** said **indicating** means (14) is grouped in an upper section and a lower section and the lower section is configured to light up when said vehicle has been overtaken and the distance from the vehicle overtaken is greater than the length of the host vehicle and there is room for the host vehicle to move into the same lane as the overtaken vehicle and drive on ahead of it.

2. The warning system (2) according to claim 1, in which the processing unit (10) is further adapted to determine a state for the warning system on the basis of one or more vehicle-related parameters (20), a basic state being set if there is no intention to change traffic lanes, and a warning state if a lane change has begun.

3. The warning system according to claim 2, in which the processing unit (10) is further adapted to determine a further state for the warning system on the basis of one or more vehicle-related parameters (20), a transition state being set if an intention to change traffic lane is detected, via which transition state the basic state changes to the warning state.

4. The warning system according to claim 2 or 3, in which the nature of the warning indication depends on the state of the warning system.

5. The warning system according to any one of the foregoing claims, in which said viewing device takes the form of at least one rearview mirror.

6. The warning system according to any one of claims 2-4, in which said vehicle-related parameters (20) comprise the state of the host vehicle's direction indicators and/or its vicinity to traffic lane markings.

7. The warning system according to any one of the foregoing claims, in which said vehicle is a vehicle approaching from behind in an adjacent traffic lane.

8. The warning system according to any one of the foregoing claims, in which said warning indication (16) takes the form of a geometrical shape adapted to identify said vehicle.

9. The warning system according to claim 8, in which said geometrical shape is a rectangle.

10. The warning system according to any one of the foregoing claims, in which said processing unit is adapted to superimpose said warning indication (16) on the image of the vehicle so that the warning indication surrounds said vehicle.

11. The warning system according to any one of claims 2-4 or 6, in which the warning indication (16) is adapted to change dynamically on the basis of said Δv and said vehicle-related parameters.

12. The warning system according to any one of the foregoing claims, in which said indicating means (14) is situated behind said viewing surface (6), which takes the form of a semitransparent reflective surface.

13. The warning system according to any one of the foregoing claims, in which said indicating means (14) is situated along the edge of the viewing surface (6) and adapted to
indicate the location of a vehicle in an adjacent traffic lane.

14. The warning system according to any one of the foregoing claims, in which said indicating means (14) takes the form of LEDs.

15. The warning system according to any one of claims 1-11, in which said viewing device (4) takes the form of a VDU.

## Patentansprüche

1. Warnsystem (2) für ein Trägerfahrzeug (A), wobei das System Folgendes umfasst:
mindestens eine Betrachtungsvorrichtung (4) mit einer Betrachtungsfläche (6), die angepasst ist, um Fahrzeuge (8) darzustellen, die sich in der Nähe des Trägerfahrzeugs befinden,
eine Verarbeitungseinheit (10), die angepasst ist, um ein oder mehrere Sensorsignale (12) von einem oder mehreren Sensoren zu empfangen, die angepasst sind, um zumindest die Geschwindigkeit eines und den Abstand zu einem Fahrzeug(s) (B) in der Nähe des Fahrzeugs zu messen, um Δv zu berechnen, was der Differenz zwischen den jeweiligen Geschwindigkeiten des Fahrzeugs und des Trägerfahrzeugs entspricht, und um Δv mit mindestens einem Schwellenwert vₜ zu vergleichen, wobei das Warnsystem mindestens ein Anzeigemittel (14) umfasst, das sich in der Nähe der Betrachtungsvorrichtung (4) befindet und angepasst ist, um mindestens eine Warnanzeige (16) zur Darstellung auf oder in der Nähe der Betrachtungsfläche (6) der Betrachtungsvorrichtung zu generieren,
**dadurch**
**gekennzeichnet, dass** das Anzeigemittel (14) ferner angepasst ist, um die Position des Fahrzeugs in entsprechenden Teilen der Betrachtungsfläche (6) anzuzeigen, und dadurch, dass das Anzeigemittel (14) in einem oberen Abschnitt und einem unteren Abschnitt gruppiert ist und der untere Abschnitt konfiguriert ist, um aufzuleuchten, wenn das Fahrzeug überholt wurde und der Abstand zu dem überholten Fahrzeug größer ist als die Länge des Trägerfahrzeugs und für das Trägerfahrzeug Platz ist, damit es sich in dieselbe Spur wie das überholte Fahrzeug bewegen und vor ihm weiterfahren kann.

2. Warnsystem (2) nach Anspruch 1, wobei die Verarbeitungseinheit (10) ferner angepasst ist, um einen Zustand für das Warnsystem auf Grundlage von einem oder mehreren fahrzeugbezogenen Parametern (20) zu bestimmen, wobei ein Grundzustand eingestellt ist, wenn keine Absicht besteht, die Fahrspur zu wechseln, und ein Warnzustand, wenn ein Spurwechsel begonnen hat.

3. Warnsystem nach Anspruch 2, wobei die Verarbeitungseinheit (10) ferner angepasst ist, um einen weiteren Zustand für das Warnsystem auf Grundlage von einem oder mehreren fahrzeugbezogenen Parametern (20) zu bestimmen, wobei ein Übergangszustand eingestellt ist, wenn eine Absicht zum Wechseln der Fahrspur detektiert wird, wobei der Grundzustand über den Übergangszustand in den Warnzustand wechselt.

4. Warnsystem nach Anspruch 2 oder 3, wobei die Art der Warnanzeige von dem Zustand des Warnsystems abhängt.

5. Warnsystem nach einem der vorhergehenden Ansprüche, wobei die Betrachtungsvorrichtung die Form von mindestens einem Rückspiegel annimmt.

6. Warnsystem nach einem der Ansprüche 2-4, wobei die fahrzeugbezogenen Parameter (20) den Zustand der Blinker des Trägerfahrzeugs und/oder seine Nähe zu Fahrspurmarkierungen umfassen.

7. Warnsystem nach einem der vorhergehenden Ansprüche, wobei das Fahrzeug ein Fahrzeug ist, das sich auf einer benachbarten Fahrspur von hinten nähert.

8. Warnsystem nach einem der vorhergehenden Ansprüche, wobei die Warnanzeige (16) die Form einer geometrischen Form annimmt, die angepasst ist, um das Fahrzeug zu identifizieren.

9. Warnsystem nach Anspruch 8, wobei die geometrische Form ein Rechteck ist.

10. Warnsystem nach einem der vorhergehenden Ansprüche, wobei die Verarbeitungseinheit angepasst ist, um die Warnanzeige (16) über das Bild des Fahrzeugs zu legen, sodass die Warnanzeige das Fahrzeug umgibt.

11. Warnsystem nach einem der Ansprüche 2-4 oder 6, wobei die Warnanzeige (16) angepasst ist, um sich auf Grundlage von Δv und der fahrzeugbezogenen Parameter dynamisch zu verändern.

12. Warnsystem nach einem der vorhergehenden Ansprüche, wobei sich das Anzeigemittel (14) hinter der Betrachtungsfläche (6) befindet, welche die Form einer semitransparenten reflektierenden Fläche annimmt.

13. Warnsystem nach einem der vorhergehenden Ansprüche wobei sich das Anzeigemittel (14) entlang des Rands der Betrachtungsfläche (6) befindet und angepasst ist, um die Position eines Fahrzeugs in einer benachbarten Fahrspur anzuzeigen.

14. Warnsystem nach einem der vorhergehenden Ansprüche, wobei das Anzeigemittel (14) die Form von LEDs annimmt.

15. Warnsystem nach einem der Ansprüche 1-11, wobei die Betrachtungsvorrichtung (4) die Form einer VDU annimmt.

## Revendications

1. Système d'avertissement (2) pour un véhicule hôte (A), lequel système comprend au moins un dispositif de visualisation (4) avec une surface de visualisation (6) adaptée pour présenter des véhicules (8)qui sont dans le voisinage du véhicule hôte, une unité de traitement (10) adaptée pour recevoir un ou plusieurs signaux de capteur (12) provenant d'un ou plusieurs capteurs qui sont adaptés pour mesurer au moins la distance par rapport à un véhicule (B) dans le voisinage du véhicule, pour calculer Δv, qui est la différence entre les vitesses respectives dudit véhicule et du véhicule hôte, et pour comparer Δv avec au moins une valeur de seuil v*ₜ*,
dans lequel le système d'avertissement comprend au moins un moyen d'indication (14) situé à proximité dudit dispositif de visualisation (4) et adapté pour générer au moins une indication d'avertissement (16) pour une présentation sur ou à proximité de la surface de visualisation (6) du dispositif de visualisation,
**caractérisé en ce que** le moyen d'indication (14) est en outre adapté pour indiquer l'emplacement dudit véhicule dans des parties correspondantes de la surface de visualisation (6), et **en ce que** ledit moyen d'indication (14) est groupé en une section supérieure et une section inférieure et la section inférieure est configurée pour s'allumer lorsque ledit véhicule a été dépassé et que la distance par rapport au véhicule dépassé est supérieure à la longueur du véhicule hôte et qu'il y a de la place pour que le véhicule hôte se déplace dans la même voie que le véhicule dépassé et soit conduit devant lui.

2. Système d'avertissement (2) selon la revendication 1, dans lequel l'unité de traitement (10) est en outre adaptée pour déterminer un état pour le système d'avertissement sur la base d'un ou plusieurs paramètres (20) liés au véhicule, un état de base étant défini s'il n'y a pas d'intention de changer de voie de circulation, et un état d'avertissement si un changement de voie a commencé.

3. Système d'avertissement selon la revendication 2, dans lequel l'unité de traitement (10) est en outre adaptée pour déterminer un état supplémentaire pour le système d'avertissement sur la base d'un ou plusieurs paramètres (20) liés au véhicule, un état de transition étant établi si une intention de changer de voie de circulation est détectée, état de transition par lequel l'état de base passe à l'état d'avertissement.

4. Système d'avertissement selon la revendication 2 ou 3, dans lequel la nature de l'indication d'avertissement dépend de l'état du système d'avertissement.

5. Système d'avertissement selon l'une quelconque des revendications précédentes, dans lequel ledit dispositif de visualisation se présente sous la forme d'au moins un rétroviseur.

6. Système d'avertissement selon l'une quelconque des revendications 2 à 4, dans lequel lesdits paramètres (20) liés au véhicule comprennent l'état des indicateurs de direction du véhicule hôte et/ou sa proximité par rapport à des marquages de voie de circulation.

7. Système d'avertissement selon l'une quelconque des revendications précédentes, dans lequel ledit véhicule est un véhicule s'approchant par derrière dans une voie de circulation adjacente.

8. Système d'avertissement selon l'une quelconque des revendications précédentes, dans lequel ladite indication d'avertissement (16) prend la forme d'une forme géométrique adaptée pour identifier ledit véhicule.

9. Système d'avertissement selon la revendication 8, dans lequel ladite forme géométrique est un rectangle.

10. Système d'avertissement selon l'une quelconque des revendications précédentes, dans lequel ladite unité de traitement est adaptée pour superposer ladite indication d'avertissement (16) sur l'image du véhicule de telle sorte que l'indication d'avertissement entoure ledit véhicule.

11. Système d'avertissement selon l'une quelconque des revendications 2 à 4 ou 6, dans lequel l'indication d'avertissement (16) est adaptée pour changer de manière dynamique sur la base de ladite Δv et desdits paramètres liés au véhicule.

12. Système d'avertissement selon l'une quelconque des revendications précédentes, dans lequel ledit moyen d'indication (14) est situé derrière ladite surface de visualisation (6), qui prend la forme d'une surface réfléchissante semi-transparente.

13. Système d'avertissement selon l'une quelconque des revendications précédentes, dans lequel ledit moyen d'indication (14) est situé le long du bord de la surface de visualisation (6) et adapté pour indiquer l'emplacement d'un véhicule dans une voie de circulation adjacente.

14. Système d'avertissement selon l'une quelconque des revendications précédentes, dans lequel ledit moyen d'indication (14) est sous la forme de diodes électroluminescentes, DEL.

15. Système d'avertissement selon l'une quelconque des revendications 1 à 11, dans lequel ledit dispositif de visualisation (4) prend la forme d'un écran de visualisation, VDU.
